# EUROPÄISCHE PATENTSCHRIFT

(11) **EP 2 199 186 B1**
(45) Veröffentlichungstag und Bekanntmachung des Hinweises auf die Patenterteilung: **03.06.2015**
(21) Anmeldenummer: 08021913.2
(22) Anmeldetag: 17.12.2008
(51) Int. Cl.: B62D 5/06, B62D 5/08, B62D 5/09

(54) **Hydraulische Lenksteuervorrichtung**
Hydraulic steering controller
Dispositif de commande de direction hydraulique

(43) Veröffentlichungstag der Anmeldung: 23.06.2010
(73) Patentinhaber: HAWE Hydraulik SE, 81673 München (DE)
(72) Erfinder: Heusser, Martin, 81245 München (DE); Stönner, Christoph, Dipl.-Ing., 80639 München (DE)
(74) Vertreter: Grünecker Patent- und Rechtsanwälte PartG mbB

(56) Entgegenhaltungen:
- EP-A- 1 413 773
- EP-A- 1 486 681
- WO-A-2005/077731
- WO-A-2008/043428
- WO-A-2008/095498
- DE-A1- 10 159 326
- DE-A1-102005 043 344
- US-A- 4 266 464

## Beschreibung

### Gebiet der Erfindung

Die Erfindung betrifft eine hydraulische Lenksteuervorrichtung gemäß des Oberbegriffs des Patentanspruchs 1.

### Beschreibung des Standes der Technik

Hydraulische Lenksysteme zur Reduzierung der Kraft zur Betätigung des Lenkrades eines Kraftfahrzeugs sind in der Kraftfahrzeugtechnik weit verbreitet und unter der Bezeichnung Servolenkung allgemein bekannt. Diese klassische Servolenkung dient als hydraulische Kraftunterstützung der Lenkbewegung, um die Kraft zu reduzieren, die benötigt ist, um eine Bewegung des Lenkrads auf die Räder zu übertragen. Bei dieser Art von Lenkung besteht eine direkte mechanische Verbindung zwischen Lenkrad und Rädern.

Im Gegensatz dazu gibt es bei Nutzfahrzeugen, wie zum Beispiel Gabelstaplern, Schaufelladern, Traktoren, Mähdreschern etc., den Bedarf, die Lenkung in Form einer Joystick-Lenkung auszuführen, wobei der Joystick auch die Form eines Lenkrads annehmen kann. Von Bedeutung ist jedoch, dass bei dieser Art von Lenkung keine mechanische Kopplung zur Übertragung von Drehmoment zwischen Handsteuerung und Rad vorhanden ist. Zur Realisierung solcher Lenksysteme werden an einem Joystick oder einem Lenkrad elektrische Lenksignale generiert, die an eine Krafterzeugungseinheit weitergereicht werden, die dann die Kräfte für die Lenkbewegungen erzeugt und auf die Räder überträgt. Als Krafterzeugungs- und Übertragungseinheit werden oft hydraulische Systeme verwendet.

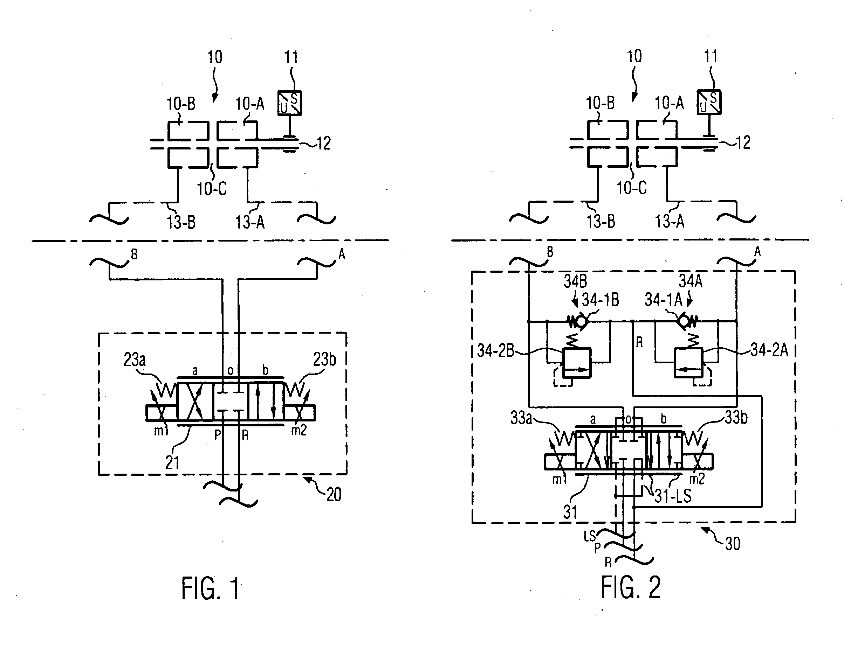

Die vorliegende Erfindung geht von einer solchen elektrisch ansteuerbaren hydraulischen Krafterzeugungs- und Übertragungseinheit aus. Fig. 1 zeigt eine hydraulische Lenksteuervorrichtung einer solchen hydraulischen Krafterzeugungs- und Übertragungseinrichtung gemäß des firmeninternen Stands der Technik des Anmelders. In Fig. 1 bezeichnet das Bezugszeichen 10 einen hydraulischen Aktuator, der das für die Lenkung erforderliche Bewegungsmoment erzeugt. Insbesondere wird in Fig. 1 ein doppelt wirkender Zylinder 10 schematisch dargestellt. Ein Kolben 10-C teilt den Innenraum des doppelt wirkenden Zylinders 10 in eine erste Arbeitskammer 10-A und eine zweite Arbeitskammer 10-B auf, die über Anschlussleitungen 13-A und 13-B mit einem hydraulischen System bestehend aus einer hydraulischen Lenksteuerung 20 und Versorgungseinheiten wie Pumpen, Drucksteuerungen, Reservoir etc. (nicht gezeigt) verbunden sind. Eine Kolbenbewegung im doppelt wirkenden Zylinder 10 wird auf eine Kolbenstange 12 übertragen, deren Lageposition durch einen Sensor 11 erfaßt wird.

In Fig. 1 bezeichnet das Bezugszeichen 21 ein 4/3-Wegeschieberventil, das auf einer Eingangsseite mit einer Druckleitung P und einer Rücklaufleitung R verbunden ist. Auf einer Ausgangsseite ist das 4/3-Wegeschieberventil 21 mit einer ersten Arbeitsleitung A und einer zweiten Arbeitsleitung B verbunden. Die Arbeitsleitungen A und B werden jeweils mit den Anschlussleitungen 13-A und 13-B des hydraulischen Aktuators 10 verbunden. Das 4/3-Wegeschieberventil 21 wird im Ruhezustand durch Federn 23a und 23b in einer Mittelstellung **0** gehalten, in der alle Anschlüsse gesperrt sind. Durch Magnete m1 und m2 wird der Schieber des 4/3-Wegeschieberventils in die Arbeitsstellung **a** bzw. **b** bewegt. Die Darstellung in Fig. 1 zeigt ein proportionales 4/3-Wegeschieberventil, was durch die Linien auf beiden Seiten des Ventilsymbols in Fig. 1 angedeutet ist, d.h. der Volumenstrom lässt sich durch die Elektromotoren m1 und m2 steuern.

In der Ruhestellung **0** sind alle Anschlüsse im Ventil blockiert und der Kolben 10-C bzw. die damit verbundene Kolbenstange 12 des hydraulischen Aktuators 10 hält seine Position. Wird die Spule m1 des 4/3-Wegeschieberventil 21 bestromt, schiebt sich der Schieberkolben des 4/3-Wegeschieberventils 21 in Richtung Stellung **b.** Da es sich um ein Proportionalventil handelt, verändert sich der Volumenstrom langsam. D.h. der maximal mögliche Volumenstrom wird bei maximaler Auslenkung des Schieberkolbens des 4/3-Wegeschieberventils erreicht. In der Stellung **b** ist die Druckleitung P mit der Arbeitsleitung B verbunden und die Arbeitsleitung A ist mit der Rückleitung R verbunden. In der Stellung **b** fließt hydraulische Flüssigkeit von der Pumpe (nicht gezeigt) über die Arbeitsleitung B und den Anschluss 13-B in die zweite Arbeitskammer 10-B des doppelt wirkenden Zylinders 10. Gleichzeitig wird aus der ersten Arbeitskammer 10-A des doppelt wirkenden Zylinders 10 Hydraulikflüssigkeit über die Anschluss 13-A und die Arbeitsleitung A in die Rücklaufleitung R und damit zurück ins Reservoir (nicht gezeigt) geschoben. Die Kolbenstange 12 bewegt sich in der in Fig. 1 gezeigten Darstellung nach rechts. Wird die Stromzufuhr zur Spule m1 unterbrochen, schiebt sich der Schieber des 4/3-Wegeventils aufgrund der Federspannung der Federn 23a und 23b zurück in die Nullstellung **0,** und der Zulauf und Ablauf für die Hydraulikflüssigkeit für den doppelt wirkenden Zylinder 10 wird unterbrochen. Wird die Spule m2 bestromt, schiebt sich der Schieber des 4/3-Wegeschieberventils 21 in die Stellung **a.** In diesem Fall ist die Arbeitsleitung A mit der Druckleitung P verbunden und hydraulische Flüssigkeit wird von der Pumpe (nicht gezeigt) über die Druckleitung P, die Arbeitsleitung A und den Anschluss 13-A in die erste Druckkammer 10-A des doppelt wirkenden Zylinders 10 gedrückt. Gleichzeitig wird in der Stellung **a** die Arbeitsleitung B mit der Rücklaufleitung R verbunden, so dass hydraulische Flüssigkeit aus der zweiten Druckkammer 10-B des doppelt wirkenden Zylinders 10 über den Anschluss 13-B, die Arbeitsleitung B und die Rücklaufleitung R in das Reservoir zurückströmen kann. In der Stellung **a** bewegt sich also die Kolbenstange 12 in der in Fig. 1 gezeigten Darstellung nach links.

Fig. 2 zeigt eine Variante des in der Fig. 1 gezeigten Stands der Technik, bei der die hydraulische Lenksteuerung 30 um die Funktion einer integrierten Schock- und Nachsaugfunktion und einem integrierten Lastdruckabgriff für ein lastdruckgeregeltes Gesamtsystem erweitert wurde. In Fig. 2 sind die Komponenten des hydraulischen Aktuators 10, die das für die Lenkung erforderliche Bewegungsmoment erzeugen, identisch zu denen in Fig. 1 und werden deshalb nicht mehr einzeln beschrieben. Der Lastdruckabgriff in Fig. 2 wird in dem proportionalen 4/3-Wegeschieberventil 31 realisiert. Der Lastdruckabgriff wird in handelsüblichen Wegeventilen durch Kanalstrukturen im Gehäuse der Wegeventile realisiert. In dem 4/3-Wegeschieberventil 31 der Fig. 2 ist in der Stellung **0** die Lastdruckleitung LS mit der Rückleitung R über den Lastdruckabgriff 31-LS verbunden. In den Stellungen **a** und **b** ist die Lastdruckleitung LS über den Lastdruckabgriff 31-LS mit der jeweils unter Druck stehenden Arbeitsleitung A bzw. B verbunden. Dadurch wird ein Steuersignal bereitgestellt, bei dem eine Pumpe (nicht gezeigt) abgeschaltet werden kann, wenn sich das 4/3-Wegeschieberventil 31 in Ruhestellung **0** befindet.

Die restlichen Elemente des 4/3-Wegeschieberventils 31 der Fig. 2 sind analog zu dem 4/3-Wegeschieberventil 21 in der Fig. 1. Die Federn 33a und 33b entsprechen den Federn 23a und 23b in Fig. 1. Die Elektroantriebe mit den Spulen m1 und m2 in Fig. 2 sind analog zu den Elektroantrieben mit den Spulen m1 und m2 aus Fig. 1.

Fig. 2 zeigt weiterhin zwei Schock-/Nachsaugeinheiten 34A und 34B, die jeweils einer Arbeitsleitung A bzw. B zugeordnet sind. Die Schock-/Nachsaugeinheit 34A und 34B verbindet die Arbeitsleitung A bzw. B mit der Rücklaufleitung R unter Umgehung des 4/3-Wegeschieberventils 31. Jede Schock-/Nachsaugeinheit 34A und 34B besteht aus einem Druckbegrenzungsventil 34-2A bzw. 34-2B, das antiparallel zu einem federbelasteten Rückschlagventil 34-1A bzw. 34-1 B geschaltet ist. Das heißt, die Rückschlagventile 34-1A bzw. 34-1 B dienen der Umgehung der Druckbegrenzungsventile 34-2A bzw. 34-2B und erlauben einen freien Rückfluss von der Rücklaufleitung R zur Arbeitsleitung A bzw. B.

Im Fall einer Schockbelastung auf die Kolbenachse 12 eines doppelt wirkenden Zylinders 10 erhöht sich der Druck z. B. in der ersten Arbeitskammer 10-A des doppelt wirkenden Zylinders 10 und erzeugt einen Unterdruck in der zweiten Arbeitskammer 10-B des doppelt wirkenden Zylinders 10. Übersteigt der Druck in der ersten Arbeitskammer 10-A aufgrund der Schockbelastung einen durch das Druckfolgeventil 34-2A vorgegebenen Wert, der sich aus der Federspannung und den internen Druckflächen des Ventils ergibt, öffnet sich das Druckbegrenzungsventil 34-2A aufgrund der Vorsteuerung (gestrichelte Linie) und hydraulische Flüssigkeit kann über das Druckbegrenzungsventil 34-2A in die Rückleitung R abströmen. Gleichzeitig kann hydraulische Flüssigkeit von der Rücklaufleitung R über das federvorgespannte Rückschlagventil 34-1 B von der Rücklaufleitung R in die zweite Arbeitskammer 10-B des doppelt wirkenden Zylinders 10 nachgesaugt werden, so dass kein Vakuum entsteht.

Im Normalbetrieb arbeitet die hydraulische Lenksteuerung der Fig. 2 wie die hydraulische Lenksteuerung der Fig. 1.

Dem Stand der Technik gemäß der Fig. 1 und 2 ist gemeinsam, dass die Steuerung des Zuflusses und des Abflusses der hydraulischen Flüssigkeit zu und aus dem hydraulischen Aktuator gemeinsam durch ein 4/3-Wegeschieberventil realisiert wird. Das heißt, die funktionellen Einheiten der Zuflusssteuerung und Abflusssteuerung, auf die im Folgenden als erste und zweite steuerbare Einrichtung Bezug genommen wird, sind im beschriebenen Stand der Technik in dem 4/3-Wegeschieberventil kombiniert. Eine allgemein gültige Anforderung an hydraulische Lenksysteme ist, dass die Reaktionszeit zwischen Betätigung der Lenkung und tatsächliche Ausführung des Lenkvorgangs kurz sein muss. Beispielsweise ist bei Staplern eine Reaktionszeit der Lenkung von bis zu etwa 100 ms akzeptabel. Da solche Stapler häufig im Akkord benutzt werden und sehr wendig sein müssen, wird eine Reaktionszeit von 200 ms und mehr nicht mehr toleriert. Solche kurze Reaktionszeiten können mit Schiebern mit Proportionalmagneten an beiden Enden erzielt werden, wobei allerdings das Überfahren der Nullstellung bei einer Richtungsumkehr der Lenkung eine Zeitverzögerung bedeutet. Die Herstellung von geeigneten 4/3-Wegeschieberventilen mit einer Reaktionszeit von weniger als 100 ms und einer Volumenstrommenge von ca. 25 I/min ist jedoch aufwändig und teuer. Weiterhin stellt die bei Schieberventilen nicht vermeidbare Leckage einen Nachteil dar. Darüber hinaus erlaubt ein 4/3-Wegeschieberventil nur drei Schaltstellungen. Eine wahlweise hydraulische Blockierung des Zylinders oder eine aktive Schwimmstellung zusätzlich zu den Zuständen "Lenken nach Links" und "Lenken nach Rechts" ist nicht möglich, da in diesem Fall 4 Schaltstellungen nötig wären.

Die WO 2005/077731 betrifft eine Fahrzeuglenkung und offenbart alle Merkmale im einleitenden Teil des Anspruches 1.

Die WO 2008/043428 betrifft eine hydraulische Lenkanlage für ein Nutzfahrzeug mit mehreren Achsen von denen mindestens eine lenkbar ist. Das hydraulische Lenksystem umfasst mindestens zwei unabhängige Lenkkreise, die mit mindestens einem Lenkzylinder verbunden sind, so dass eine Lenkung von zwei unabhängigen Steuereinrichtungen erfolgen kann.

Die WO 2008/095498 betrifft eine Ventilanordnung und einen hydraulischen Aktuator, wobei die Ventilanordnung vier vorgesteuerte 2/2 Sitzventile enthält, die in einer Brückenschaltung angeordnet sind, wobei der hydraulische Aktuator als Brücke in der Brückenanordnung geschaltet ist.

Die EP-A-1486681 betrifft eine elektrohydraulische Steuervorrichtung für einen Hydromotor mit vier benachbart zum Hydromotor angeordneten elektrisch fernverstellbaren proportionalen 2/2-Wegesitzventilen.

Die EP-A-1413773 betrifft eine computerisierte hydraulische Proportionalsteuerung für einen Hydromotor. Die Steuervorrichtung enthält vier proportionale 2/2-Wege-Sitzventile.

Die DE-A-10 2005 04334 betrifft ein Hydrauliksystem mit einem Druckkompensator. Das Hydrauliksystem enthält vier proportionale 2/2-Wegeventile, die in einer Brückenschaltung angeordnet sind, um einen Hydraulikzylinder anzusteuern.

Die DE-A-10159326 betrifft eine Fahrzeuglenkung mit einer hydraulischen Lenkkraftverstärkung, die vier proportionale 2/2 Wegeschieberventile verwendet.

Die US 4,266,464 betrifft eine hydraulische Steuervorrichtung für eine Servolenkung. Das Dokument offenbart zwei Steuerventile zum rechtsseitigen bzw. linksseitigen Steuern sowie zwei Hauptventile. Die vier Ventile besitzen einen ähnlichen Aufbau und sind Kolbenschieberventile.

### Zusammenfassung der Erfindung

Die vorliegende Erfindung wurde durchgeführt, um die obengenannten Mängel zumindest zum Teil zu beheben. Es ist deshalb einer Aufgabe der vorliegenden Erfindung, eine hydraulische Lenksteuerungsvorrichtung bereitzustellen, die kurze Reaktionszeiten von weniger als 100 ms aufweist, leckagefrei ist und die wahlweise eine hydraulische Blockierung als auch eine aktive Schwimmstellung der Lenkung erlaubt.

Die gestellte Aufgabe wird erfindungsgemäß mit den Merkmalen des Anspruchs 1 gelöst.

Ein entscheidender Unterschied zwischen den Lösungen des Stands der Technik und der vorliegenden Erfindung ist, dass die im Stand der Technik kombinierten funktionellen Einheiten der Zuflusssteuerung und Abflusssteuerung, bzw. der ersten und zweiten steuerbaren Einrichtung, funktionell aufgetrennt werden. Das 4/3-Wegeschieberventil des Stands der Technik wird dabei durch zwei 2/2-Wegesitzventile ersetzt, wodurch sich eine Aufteilung der Zuströmungswege und Abströmungswege zu dem hydraulischen Aktuator ergibt.

Da die zwei 2/2-Wegesitzventile leckagefrei sind, ist die hydraulische Lenksteuerungsvorrichtung gemäß der vorliegenden Erfindung wartungsärmer und energieeffizienter als die des Stands der Technik. Weiterhin muss bei Richtungswechsel der Lenkung keine Nullstellung überfahren werden, wodurch sich verbesserte Reaktionszeiten ergeben. Außerdem können die zwei 2/2-Wegesitzventile unabhängig voneinander und sogar überlappend angesteuert werden, weil die beiden Magneten nicht über den Schieber mechanisch gekoppelt sind. Daraus ergibt sich ein verbessertes dynamisches Verhalten der Lenksteuervorrichtung. Zusätzlich erlauben die beiden 2/2-Wegesitzventile vier mögliche Schaltstellungen, so dass folgende Steuerzustände realisierbar sind: a) Lenken nach Rechts; b) Lenken nach Links; c) hydraulische Blockierung der Lenkung; und d) Schwimmstellung.

Ein weiterer Vorteil der Verwendung von zwei 2/2-Wegesitzventilen ist, dass zur Bereitstellung der für die Lenkung notwendige Volumenstromsteuerung sowohl Proportionalventile als auch taktgesteuerte Schwarz-/Weißventile verwendet werden können. Dadurch kann je nach technischen und ökonomischen Anforderungen aus einem breiten Sortiment an verfügbaren 2/2-Wegesitzventilen ausgewählt werden.

Bei Verwendung von 2/2-Wegesitzventilen mit Proportionalmagneten gemäß einer Ausführungsform nach **Anspruch 2** kann der Volumenstrom stufenlos geregelt werden. Die 2/2-Wegesitzventile sind einfache, funktionssichere und gegebenenfalls kostengünstige handelsübliche Ventile. Ein besonderer Vorteil dieser Ventile ist, dass ein sanfter Übergang bei Volumenstromänderungen stattfindet, d.h. es gibt keine abrupten Druckänderungen im System bei Veränderung des Volumenstroms. Dadurch werden Geräusche und Vibrationen klein gehalten.

Wenn die Anforderung an die Laufruhe und die Geräuschentwicklung geringer ist, kann alternativ dazu die Volumenstromregelung auch durch eine Taktsteuerung, zum Beispiel durch Pulsweitenmodulation (PWM-Modulation) eines Schwarz-/Weiß-2/2-Wegesitzventils gemäß einer Ausführungsform nach **Anspruch 3** realisiert werden. Schwarz-/Weiß-Ventil bedeutet dabei, dass nur zwei Schaltstellungen möglich sind, und keine Zwischenpositionen realisiert werden. Die Volumenstromregelung erfolgt dann durch Steuerung des An-/Auszeitverhältnises des Schwarz-/Weiß-Magneten, der die Ventilstellung steuert. Der Vorteil solcher Schwarz-/Weißventile ist der einfachere mechanische Aufbau und damit eine kotengünstigere und dabei zuverlässige Mechanik.

In einer weiteren Ausführungsform gemäß **Anspruch 4** können die zwei 2/2-Wegesitzventile vorgesteuerte Ventile sein, bei denen ein Öffnungsquerschnitt eines Strömungswegs z. B. durch eine Ventilnadel eines Vorsteuerventils gesteuert wird, die über eine spezielle Feder direkt vom Anker eines Proportionalmagneten bewegt wird. Durch die Vorsteuerung lassen sich schnellere und präziser steuerbare Ventile realisieren, was sich wiederum auf die Reaktionszeit und die Dynamik des Lenksystems auswirkt.

Gemäß **Anspruch 5** wird in den ersten und den zweiten Strömungsweg stromabwärts zu den 2/2-Wegesitzventilen jeweils ein erstes Rückschlagventil angeordnet, das in Richtung 2/2-Wegesitzventil sperrt. Weiterhin sind Steuerleitungen der zweiten steuerbaren Einrichtung zum Ablassen von hydraulischer Flüssigkeit aus dem hydraulischen Aktuator jeweils zwischen dem 2/2-Wegesitzventil und dem ersten Rückschlagventil angeschlossen. Durch das erste Rückschlagventil wird der Abströmweg in die Rückleitung von dem ersten bzw. zweiten Strömungsweg abgetrennt. Durch die Steuerleitungen für die zweite steuerbare Einrichtung zum Ablassen von hydraulischer Flüssigkeit wird der Abströmweg ins Reservoir nur dann freigeben, wenn die komplementäre Zulaufleitung unter Druck steht. Weiterhin wird durch diese Verschaltung erreicht, dass die hydraulische Lenksteuervorrichtung einen Blockierzustand und einen Schwimmzustand einnehmen kann.

Gemäß **Anspruch 6** ist die zweite steuerbare Einrichtung stromabwärts zu den ersten Rückschlagventilen an dem ersten Strömungsweg und dem zweiten Strömungsweg angeschlossen, so dass ein ungehindertes Abströmen von hydraulischer Flüssigkeit aus einer entsprechenden Arbeitskammer des hydraulischen Aktuators erlaubt wird.

Gemäß einer besonderen Ausführungsform nach **Anspruch** 7 sind die Steuerleitungen der zweiten steuerbaren Einrichtung über ein Wechselventil mit einer Lastdrucksteuerleitung verbunden. Dadurch wird die druckführende Steuerleitung mit einem Lastdrucksteuerkreis verbunden, so dass ein Druckanforderungssignal entstehen und weitergeleitet werden kann. Somit wird ein Signalpfad bereitgestellt, um eine Versorgungspumpe lastdruckabhängig zu steuern.

Gemäß einer weiteren Ausführungsform nach **Anspruch 8** wird die Lastdrucksteuerleitung über eine Blende mit der Rücklaufleitung verbunden. Dadurch wird sichergestellt, dass sich der Druck in den Steuerleitungen der zweiten steuerbaren Einrichtung und in der Lastdrucksteuerleitung abbaut, wenn kein Lenkvorgang ausgeführt wird. Da in diesem Fall keine Druckversorgung durch den hydraulischen Aktuator nötig ist, kann er in dieser Zeit in Ruhezustand versetzt werden, wodurch Energie gespart wird. Weiterhin wird sichergestellt, dass sich die zweite steuerbare Einrichtung im gesperrten Ruhezustand befindet, wenn kein Lenkvorgang stattfindet.

In einer alternativen Ausführungsform dazu gemäß **Anspruch 9** werden die Steuerleitungen der zweiten steuerbaren Einrichtung über jeweils eine Blende mit der Rücklaufleitung verbunden. Dadurch wird erreicht, dass sich der Druck in den Steuerleitungen abbaut, wenn kein Lenkvorgang durchgeführt wird, selbst wenn die Steuerleitungen nicht an einen Lastdrucksteuerkreis angeschlossen sind. Die hydraulische Lenksteuerungsvorrichtung wird dadurch in einen Bereitschaftszustand versetzt.

In einer Ausführungsform nach **Anspruch 10** umfasst die zweite steuerbare Einrichtung zum Ablassen von hydraulischer Flüssigkeit aus dem hydraulischen Aktuator ein erstes und ein zweites hydraulisch entsperrbares Rückschlagventil, wobei das erste entsperrbare Rückschlagventil eine Fluidverbindung zwischen dem ersten Strömungsweg und einer Rücklaufleitung zum Reservoir sperrt, und wobei das zweite hydraulische entsperrbare Rückschlagventil eine Fluidverbindung zwischen dem zweiten Strömungsweg und der Rücklaufleitung zum Reservoir sperrt. Die Verwendung von zwei hydraulisch entsperrbaren Rückschlagventilen stellt eine einfache und kostengünstige Art der Realisierung der zweiten steuerbaren Einrichtung zum Ablassen von hydraulischer Flüssigkeit aus dem mindestens einen hydraulischen Aktuator dar, bei dem sich auch die Betriebszustände einer Schwimmstellung und einer Blockierstellung realisieren lassen. Vorzugsweise wird ein Rückschlagventil mit Federvorspannung verwendet, um die Betriebssicherheit zu erhöhen. Weiterhin erhält man durch die Verwendung von zwei unabhängig steuerbaren hydraulisch entsperrbaren Rückschlagventilen in Kombination mit zwei unabhängigen 2/2-Wegesitzventilen zwei getrennte und unabhängig steuerbare Ventilstufen für den ersten bzw. zweiten Strömungsweg, sowie getrennte und unabhängige Ventilstufen für Zu- und Abflusswege, wodurch eine höhere Dynamik erreichbar ist, da alle Ventile unabhängig voneinander schaltbar sind. Bei regelungstechnisch unterstützten Systemen lässt sich eine "Safe-state"-Funktion im Fehlerfall durch die unabhängige Ansteuerung der Ventilstufen für den ersten und zweiten Strömungsweg realisieren.

In einer alternativen Ausführungsform gemäß **Anspruch 11** umfasst die zweite steuerbare Einrichtung zum Ablassen von hydraulischer Flüssigkeit aus dem mindestens einen hydraulischen Aktuator, ein erstes und ein zweites hydraulisch entsperrbares Lasthalteventil, wobei das erste hydraulisch entsperrbare Lasthalteventil eine Fluidverbindung zwischen dem ersten Strömungsweg und einer Rücklaufleitung zum Reservoir sperrt, und wobei das zweite hydraulisch entsperrbare Lasthalteventil eine Fluidverbindung zwischen dem zweiten Strömungsweg und der Rücklaufleitung zum Reservoir sperrt. In dieser Ausführungsform wurden die hydraulisch entsperrbaren Rückschlagventile der vorher beschriebenen Ausführungsform durch hydraulisch entsperrbare Lasthalteventile ersetzt. Dadurch wird der vorher beschriebenen Funktionalität eine Schock- und Nachsaugfunktion hinzugefügt. D.h. bei einer Schockbelastung, beispielsweise durch einen Stoß auf die Antriebsräder, der sich auf den hydraulischen Aktuator, zum Beispiel einen doppelt wirkenden Zylinder, gegensinnig angeordneten Differentialzylindern oder hydraulischen Motoren, fortpflanzt, entsteht in einer Arbeitskammer ein schock- oder impulsartiger Überdruck und in einer komplementären Arbeitskammer entsteht gleichzeitig ein Unterdruck. Überschreitet der Überdruck einen von dem Lasthalteventil vorgegebenen Wert, öffnet das Lasthalteventil einen Strömungsweg in Richtung Rückleitung, um Druck abzuleiten und Hydraulikkomponenten zu schützen.

Weiterhin wird über ein in jedem Lasthalteventil integriertes zweites Rückschlagventil ein Strömungsweg zwischen der Rückleitung und der unter Unterdruck stehenden komplementären Arbeitskammer freigegeben. Dadurch wird eine Nachsaugfunktion integriert. D.h. bei einer Schockbelastung des hydraulischen Verbrauchers, bei dem in einem ersten Strömungsweg ein Überdruck entsteht, entsteht automatisch in dem zweiten Strömungsweg ein Unterdruck. Dabei wird der Überdruck über das Lasthalteventil in den Rücklauf abgeleitet und der Unterdruck wird durch ein Nachsaugen durch das Rückschlagventil ausgeglichen.

Daneben werden die gleichen Vorteile erreicht, wie vorher im Zusammenhang mit dem Rückschlagventil beschrieben wurden.

In einer Ausführungsform gemäß des **Anspruches 12** sind die zwei 2/2-Wegesitzventile elektrisch betätigbare Ventile. Dadurch wird die hydraulische Lenksteuervorrichtung in weit verbreiteten elektrohydraulischen Lenksystemen verwendbar.

In einer weiteren Ausführungsform gemäß des **Anspruchs 13** ist auf der Eingangsseite der zwei 2/2-Wegesitzventile ein Druckspeicher angeschlossen, der durch ein drittes Rückschlagventil von der Druckversorgung (Pumpe) abgetrennt ist. Dadurch wird eine Notversorgung im Fehlerfall bereitgestellt, so dass zum Beispiel bei Ausfall der Pumpe das Fahrzeug lenkbar bleibt. Auch bei einer Lastdruckregelung der Pumpe kann eine höhere Dynamik erzielt werden, da Totzeiten beim Hochfahren der Pumpe überbrückt werden können. Da die Ventile lecköldicht sind, erhöht sich die Effizienz eines Druckspeichers, da keine Druckverluste durch Leckagen entstehen. Optional können an dem Druckspeichersystem zusätzliche Systemkomponenten angeschlossen werden, wie zum Beispiel Zulauf-/Umlaufdruckwagen, Prioritätsschaltungen und LS-Systemdruckabsicherungen. Diese zusätzlichen Systemkomponenten dienen dazu, das Lenksystem ausfallsicherer zu machen und unabhängiger von Druckschwankungen aufgrund von internen Systemstörungen (zum Beispiel Pumpenstörungen) oder äußeren Einwirkungen (zum Beispiel auf den hydraulischen Aktuator). Die zusätzlichen Systemkomponenten können deshalb der Druckregelung mit zwei unabhängigen Druckquellen (Pumpe, Druckspeicher) dienen.

### Kurze Beschreibung der Figuren

Im Folgenden werden anhand der Zeichnungen Ausführungsformen des Erfindungsgegenstands im Vergleich zum Stand der Technik erläutert. Es zeigen:
- Fig. 1: ein Blockschaltbild einer hydraulischen Lenksteuervorrichtung gemäß dem Stand der Technik;
- Fig. 2: ein Blockschaltbild einer erweiterten Ausführung einer hydraulischen Lenksteuervorrichtung gemäß dem Stand der Technik, die zusätzlich eine Schock- und Nachsaugefunktion bereitstellt;
- Fig. 3: eine hydraulische Lenksteuerungsvorrichtung gemäß einer ersten Ausführungsform der vorliegenden Erfindung;
- Fig. 4: ein Blockschaltbild einer zweiten Ausführungsform einer hydraulischen Lenksteuervorrichtung gemäß der vorliegenden Erfindung; und
- Fig. 5: ein Blockschaltbild einer dritten Ausführungsform einer hydraulischen Lenksteuervorrichtung gemäß der vorliegenden Erfindung.

### Ausführliche Beschreibung von Ausführungsformen

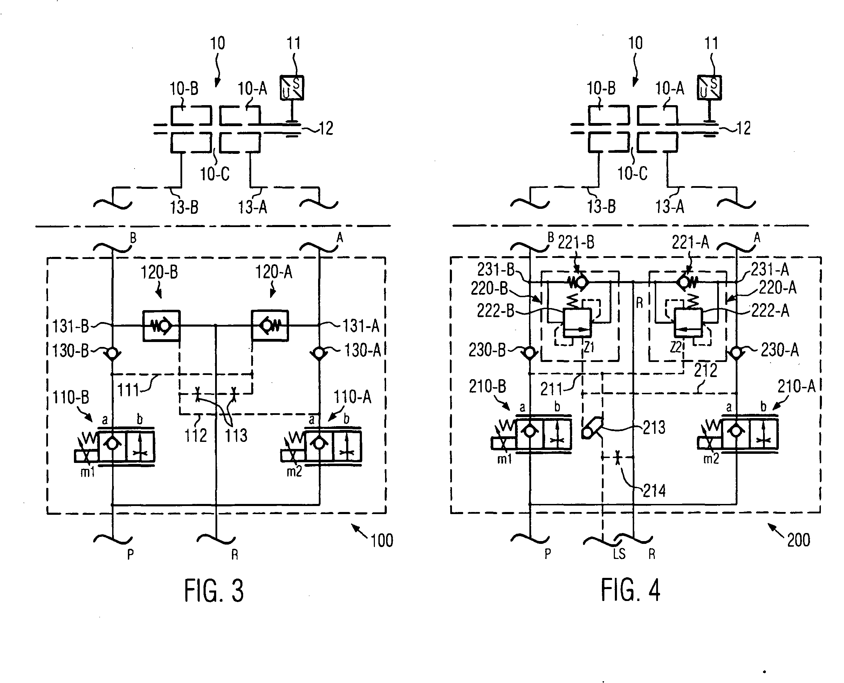

Die in Fig. 3 gezeigte erste Ausführungsform der vorliegenden Erfindung zeigt mit dem Bezugszeichen 10 einen für eine Lenkung vorgesehenen hydraulischen Aktuator. In der Darstellung der Fig. 3 wird beispielhaft ein doppelt wirkender Zylinder gezeigt, wie er bereits mit den Figuren 1 und 2 beschrieben wurde. Der Innenraum des doppelt wirkenden Zylinders 10 wird durch einen Kolben 10-C in eine erste Arbeitskammer 10-A und eine zweite Arbeitskammer 10-B aufgeteilt, in die über Anschlüsse 13-A und 13-B Hydraulikflüssigkeit fließen kann. Der Kolben 10-C im Inneren des doppelt wirkenden Zylinders 10 kann aufgrund eines Druckunterschieds in den zueinander komplementären Arbeitskammern bewegt werden. Eine Kolbenstange 12, die mit dem Kolben 10-C im Zylinder 10 verbunden ist, überträgt die Bewegungskräfte auf ein Lenkritzel (nicht gezeigt). Fig. 3 zeigt als besondere Ausführungsform einen doppelt wirkenden Zylinder mit gleich großen Beaufschlagungsflächen. Dies wird realisiert durch eine Kolbenstange, die durch den gesamten Zylinder läuft und an beiden Enden aus dem Zylinder austritt. Dadurch entstehen gleich große druckwirksame Flächen auf beiden Seiten des Kolbens im Inneren des doppelt wirkenden Zylinders, wodurch sich gleiche Geschwindigkeiten der Kolbenstange 12 in beide Richtungen bei gleichen Druckdifferenzen ergeben. Bei unterschiedlichen Beaufschlagungsflächen würden sich unterschiedliche Geschwindigkeiten für die beiden Bewegungsrichtungen der Kolbenstange 12 ergeben, wenn die gleiche Druckdifferenz in den beiden Druckkammern verwendet werden. Dies ließe sich jedoch durch eine individuelle geschwindigkeitsabhängige Drucksteuerung für die beiden Druckkammern in dem doppelt wirkenden Zylinder 10 kompensieren. Ein Sensor an der Kolbenstange 12 erfaßt die Lageposition der Kolbenstange 12.

Obwohl in den Fig. 1 bis 5 ein doppelt wirkender Zylinder mit gleich großen Beaufschlagungsflächen gezeigt wird, sind auch andere hydraulische Aktuatoren verwendbar. Zum Beispiel können auch doppelt wirkende Zylinder mit ungleichen Beaufschlagungsflächen bei gleichzeitiger geschwindigkeitsabhängiger Druckregelung für die beiden Bewegungsrichtungen, gegensinnig angeordnete Differentialzylinder oder hydraulische Motoren, wie zum Beispiel Orbitmotor, Rollflügelmotor der Sperrflügelmotor, verwendet werden. Das von dem hydraulischen Aktuator erzeugte Bewegungsmoment wird dann zum Beispiel über ein Lenkritzel auf eine Lenkmechanik an den Rädern des Fahrzeugs übertragen.

An den Anschlüssen 13-A und 13-B des hydraulischen Aktuators 10 werden die Arbeitsleitungen A und B der hydraulischen Lenksteuervorrichtung 100 angeschlossen. Der Zufluss der Strömungswege A bzw. B (erster Strömungsweg A bzw. zweiter Strömungsweg B) wird jeweils durch ein 2/2-Wegesitzventil 110-A bzw. 110-B gesteuert. Der Abfluss von den Strömungswegen A bzw. B wird durch ein hydraulisch entsperrbares Rückschlagventil mit Federvorspannung 120-A bzw. 120-B gesteuert. Jeder der Strömungswege A und B weist eine Verzweigung 131-A und 131-B auf, an der sich der jeweilige Strömungsweg in einen Zuströmungsweg und einen Abströmungsweg aufzweigt. Ein erstes Rückschlagventil 130-A bzw. 130-B ist jeweils in dem Strömungsweg zwischen der Abzweigung 131-A bzw. 131-B und einem 2/2-Wegesitzventil 110-A bzw. 110-B angeordnet und verhindert einen Rückfluss hydraulischer Flüssigkeit in den Zuströmungsweg in Richtung Druckleitung P. Das 2/2-Wegesitzventil 110-A bzw. 110-B steuert den Mengenfluß von unter Druck stehender Hydraulikflüssigkeit aus der Druckleitung P in Richtung des ersten Rückschlagventils 130-A bzw. 130-B, das in Richtung hydraulischer Aktuator durchlässig ist, zum hydraulischen Aktuator 10.

Das in Fig. 3 dargestellte 2/2-Wegesitzventil 110-A bzw. 110-B ist als elektrisch gesteuertes Proportionalventil mit den Stellung **a** und **b** dargestellt. In der Stellung **a** ist der Durchgang von der Druckleitung P zur Arbeitsleitung A bzw. B gesperrt. In der Stellung **b** ist das Ventil 110-A bzw. 110-B durchgängig. Eine Feder hält das Ventil 110-A bzw. 110-B in Ruhestellung in der Stellung **a.** Wird die Spule z. B. des Elektromagneten m1 bestromt, bewegt sich das Ventil 110-B von der Stellung **a** in die Stellung **b.** Je nach eingeprägter Stromstärke öffnet das Ventil 110-B den Strömungsweg zwischen der Druckleitung P und der Arbeitsleitung B. Analoges gilt für den Magneten m2 des 2/2-Wegesitzventils 110-A im Hinblick auf den Strömungsweg A.

Eine Vielzahl von Varianten für solche 2/2-Wegesitzventile werden zum Beispiel standardmäßig von HAWE Hydraulik SE angeboten, zum Beispiel als 2/2-Wege-Einschraub-Sitzventile Typ EM oder EMP. Diese Art von zwei 2/2-Wegemagnetventilen ist als Kegelsitzventil mit direkter oder indirekter Betätigung ausgebildet. Bei der direkt betätigten Ausführung öffnet und schließt ein Kegelstift den Ventildurchgang unmittelbar. Bei den indirekt betätigten Varianten wird die Vorsteuerbohrung beispielsweise eines Stufenkolbens geöffnet oder geschlossen. Ein entstehender Druckunterschied an den gegenüberliegenden Stirnflächen des Stufenkolbens verursacht die Schaltkräfte zum Öffnen und Schließen. Bei dem TYP EMP der Ventilreihe von HAWE Hydraulik SE kann der Volumenstrom proportional gedrosselt werden. In geschlossener Stellung ist das Ventil leckölfrei dicht.

Zur Volumenstromregelung kann sowohl die proportional drosselbare Version als auch das reine Schaltventil verwendet werden. Im Fall eines reinen Schaltventils (Schwarz-/Weißventil) kann der Volumenstrom durch Taktregelung eingestellt werden. Die dafür benötigte etwas einfachere mechanische Ventilkonstruktion wird dabei durch eine etwas kompliziertere Ventilsteuerung ersetzt.

Eine Variante eines vorgesteuerten 2/2-Wegesitzventils, das hier verwendet werden kann, wird in der EP-A 0 873 275 gezeigt. In dieser Ventilvariante wird eine Ventilnadel für ein Vorsteuerventil über eine spezielle Feder direkt vom Anker eines Portionalmagneten gesteuert. Der Magnet ist in der Lage, in Abhängigkeit von seiner Strombeaufschlagung, exakt vorherbestimmbare und exakt reproduzierbare Öffnungsstellungen des Vorsteuerventils einzustellen, an die sich das Hauptschließelement selbsttätig regelnd mit Spielbewegungen anpasst. Das Hauptschließelement im Ventilsitz weist spezielle Mengenregelungsmerkmale wie zum Beispiel Fortsätze oder Steuerkerben auf.

Dieses proportionale 2/2-Wegesitzventil kann jedoch zu einem reinen Schwarz /Weißventil modifiziert werden. In diesem Fall besäße das Hauptschließelement keine speziellen Mengenregelungsmerkmale, sondern kann als Konus oder Kugel als Sitzfläche des Hauptventils ausgebildet werden. Eine Vorsteuerung kann eventuell die Ansprechzeiten des Ventils verkürzen und die Präzision der Mengenregelfunktion verbessern. Weiterhin ist es auch möglich, das Hauptschließelement im Ventilsitz mit Mengenregelungsmerkmalen auszustatten, die eine sehr steile Schaltkennlinie aufweist, im Gegensatz zu einer relativ flachen Kennlinie im Fall eines Proportionalventils. Dadurch ist zwar keine analoge Mengenflußregelung möglich, der Schaltübergang erfolgt jedoch "weicher", so dass die Hydraulikkomponenten nicht so stark abrupte Schaltübergänge belastet werden.

Zur Steuerung des Rücklaufs werden hydraulisch entsperrbare Rückschlagventile 120-A bzw. 120-B mit Federvorspannung verwendet, die jeweils an der Abzweigung 131-A bzw. 131-B der Arbeitsleitungen A bzw. B angeschlossen sind, und durch die ein Abströmweg von der Arbeitsleitung A bzw. B in eine Rücklaufleitung R bereitgestellt wird. Um einen ungehinderten Abfluss in die Rücklaufleitung R zu verhindern ist das federvorgespannte Sperrventil 120-A bzw. 120-B so angeordnet, dass es Richtung Rücklaufleitung R sperrt. Um den Abströmweg von der Arbeitsleitung A bzw. B in die Rücklaufleitung R freizugeben, können die Rückschlagventile 120-A bzw. 120-B über die Steuerleitungen 111 bzw. 112 entsperrt werden. Dabei ist ein Steuereingang des Rückschlagventils 120-B, das für den Rücklauf aus der Arbeitleitung B vorgesehen ist, über die Steuerleitung 112 mit der Arbeitsleitung A zwischen dem 2/2-Wegesitzventil 110-A und dem Rückschlagventil 130-A angeschlossen. Umgekehrt ist ein Steuereingang des federvorgespannten Rückschlagventils 120-A, das für den Rücklauf aus der Arbeitsleitung A vorgesehen ist, über die Steuerleitung 111 mit der Arbeitsleitung B zwischen dem 2/2-Wegesitzventil 110-B und dem Rückschlagventil 130-B angeschlossen. Zwischen den Steuerleitungen 111 bzw. 112 und der Rücklaufleitung R ist jeweils eine Blende 113 eingesetzt, damit im Ruhezustand der Druck absinken kann und die Rückschlagventile 120-A bzw. 120-B in den gesperrten Normalzustand übergehen können.

Im Betrieb wird in einer neutralen Lenkstellung, d.h. in einer Lenkstellung für einen Geradeauslauf, kein Lenksignal generiert und die Spulen der Magnete m1 und m2 werden nicht bestromt. In diesem Fall befinden sich die 2/2-Wegesitzventile 110-A bzw. 110-B in der Stellung **a.** D.h. die Arbeitsleitungen A bzw. B sind von der Druckversorgung abgetrennt. Die Steuerleitungen 111 und 112 sind drucklos und die federvorgespannten Rückschlagventile 120-A und 120-B befinden sich im gesperrten Normalzustand. D.h. aus den Druckkammern des doppelt wirkenden Zylinders 10 kann keine hydraulische Flüssigkeit abfließen und auch nicht zufließen. Die Kolbenstange 12 bleibt in der momentanen Position. Bei einer Lenkbewegung, zum Beispiel nach rechts, wird in einem Signalgeber in einer Lenkeinheit (nicht gezeigt) ein Signal erzeugt, so dass zum Beispiel die Spule des Magneten m1 des Ventils 110-B bestromt wird, um das Ventil 110-B von der Stellung **a** in die Stellung **b** zu bringen. Proportional zum Lenkausschlag wird ein Strom erzeugt, so dass das Ventil 110-B einen Strömungsweg mit einer Querschnittsöffnung proportional zum Lenkausschlag zwischen der Druckleitung P und der Arbeitsleitung B öffnet. Gleichzeitig wird die Steuerleitung 111 unter Druck gesetzt und entsperrt das federvorgespannte Rückschlagventil 120-A, so dass sich ein Strömungsweg zwischen der Arbeitsleitung A und der Rückleitung R öffnet. Hydraulische Flüssigkeit kann von der Druckleitung P durch das 2/2-Wegesitzventil 110-B, durch das in Durchlaßrichtung geschaltete Rückschlagventil 130-B über den Anschluss 13-B in die zweite Arbeitskammer 10-B des doppelt wirkenden Zylinders 10 strömen. Gleichzeitig kann aus der ersten Arbeitskammer 10-A des doppelt wirkenden Zylinders 10 hydraulische Flüssigkeit über den Anschluss 13-A durch das entsperrte federvorgespannte Rückschlagventil 120-A in die Rücklaufleitung R und ins Reservoir abfließen. Das in Sperrichtung geschaltete Rückschlagventil 130-A verhindert einen Abfluss über das 2/2-Wegesitzventil 110-A. Die Kolbenstange 12 bewegt sich in diesem Fall in der in Fig. 3 gezeigten Darstellung nach rechts. Die Bewegungsgeschwindigkeit der Kolbenstange 12 hängt von der Stellung des 2/2-Wegesitzventils 110-B ab.

Bei einer Lenkbewegung in Gegenrichtung wird die Stromzufuhr in die Spule des Magneten m1 unterbrochen, und dem Magneten m2 wird abhängig vom Lenkausschlag Strom zugeführt. D.h. das 2/2-Wegesitzventil 110-B kehrt in die Ruhestellung **a** zurück und das 2/2-Wegesitzventil 110-A bewegt sich in den Zustand **b** und gibt abhängig vom Lenkausschlag einen Strömungsweg mit einem Strömungsquerschnitt proportional zum Lenkausschlag zwischen der Druckleitung P und der Arbeitsleitung A frei. Gleichzeitig wird die Steuerleitung 112 unter Druck gesetzt und das Rückschlagventil 120-B wird entsperrt.

Hydraulische Flüssigkeit kann in die erste Arbeitskammer 10-A des doppelt wirkenden Ventils 10 zuströmen und aus der zweiten Arbeitskammer 10-B über das entsperrte Rückschlagventil 120-B in die Rücklaufleitung R abfließen. Die Kolbenstange 12 bewegt sich in der in Fig. 3 gezeigten Darstellung nach links.

Die hydraulische Lenksteuervorrichtung 100 kann gemäß der Tabelle 1 vier Zustände einnehmen.

**Tabelle 1**

| | Blockieren | Schwimmen | Links | Rechts |
|---|---|---|---|---|
| Stellung 110-A | ***a*** | ***b*** | ***b*** | ***a*** |
| Stellung 110-B | ***a*** | ***b*** | ***a*** | ***b*** |

Im Ruhezustand befinden sich beide 2/2-Wegesitzventile 110-A und 110-B im Zustand **a.** Dieser Zustand wird im Folgenden als erster Zustand **aa** bezeichnet. Dies entspricht einem Blockierzustand, da keine hydraulische Flüssigkeit in die Druckkammern des beidseitig wirkenden Zylinders 10 zu- oder abfließen kann. Befindet sich das Ventil 110-B im Zustand **b** und das Ventil 110-A im Zustand **a,** bewegt sich Kolbenstange 12 nach rechts (zweiter Zustand **ab**). Befindet das Ventil 110-A im Zustand **b** und das Ventil 110-B im Zustand **a,** bewegt sich die Kolbenstange 12 nach links (dritter Zustand **ba**). Als vierter Zustand ist es auch denkbar, dass beide Ventile 110-A und 110-B zum Beispiel über eine getrennte Schaltvorrichtung (nicht gezeigt) in den Zustand **b** geschaltet werden (vierter Zustand **bb**). In diesem Fall sind beide Steuerleitungen 111 und 112 unter Druck und öffnen die Rückschlagventile 120-A und 120-B. Dadurch kann hydraulische Flüssigkeit frei in die Druckkammern des doppelt wirkenden Zylinders 10 zu- und abfließen. D.h. die hydraulische Lenksteuervorrichtung befindet sich in einem Schwimmzustand.

In einer weitergeführten Ausführungsform gemäß der Fig. 4 wird der hydraulischen Lenksteuervorrichtung 100 der Fig. 3 eine Schock- und Nachsaugfunktion hinzugefügt. Fig. 4 zeigt eine hydraulische Lenksteuervorrichtung 200, bei der das hydraulisch entsperrbare federvorgespannte Rückschlagventil 120-A bzw. 120-B der Fig. 3 durch jeweils ein Lasthalteventil 220-A bzw. 220-B ersetzt wurde. Die Lasthalteventile 220-A bzw. 220-B setzen sich zusammen aus jeweils einem speziellen eingangsseitig und ausgangsseitig vorgesteuertem Druckbegrenzungsventil 222-A und 222-B, das sich über einen zusätzlichen Steuereingang Z1 bzw. Z2 entsperren lässt, und einem antiparallel dazu geschalteten Rückschlagventil 221-A und 221-B. Antiparallel bedeutet dabei, das die Durchlaßrichtungen der Ventile 221-A (bzw. 221-B) und 222-A (bzw. 222-B) in entgegengesetzter Richtung sind. Die Rückschlagventile 221-A und 221-B sind dabei so angeschlossen, dass der Strömungsweg von der Rücklaufleitung R zur jeweiligen Arbeitsleitung A bzw. B offen ist, d. h. die Rückschlagventile erlauben ein Nachsaugen von hydraulischer Flüssigkeit im Fall eines Unterdrucks in einer Arbeitskammer eines hydraulischen Aktuators. Die speziellen eingangsseitig und ausgangsseitig vorgesteuerten Druckbegrenzungsventile 222-A und 222-B sind Ventile, deren Ein- und Ausgänge durch eine Feder im Ruhezustand voneinander getrennt sind. Eingangsseitig bedeutet in diesem Fall, dass durch einen Eingangsdruck eine Verbindung zwischen Eingang und Ausgang des Ventils gegen die Federspannung hergestellt werden kann. Der nötige Druck wird durch die Federkraft vorgegeben. Ausgangsseitig vorgesteuert bedeutet, dass ein Druck am Ausgang die Federkraft unterstützt und die Verbindung zwischen Eingang und Ausgang trennt. Ein Druck am Steuereingang Z1 bzw. Z2 kann eine Verbindung zwischen Ein- und Ausgang gegen die Federkraft bei einem niedrigeren Druck herstellen, als er am eingangsseitig nötig wäre. D. h., das Ventil kann zur Sicherheit durchschalten, wenn eingangsseitig der Druck zu Hoch wird (Schock).

Die Steuerleitungen 111 und 112 der Fig. 3 entsprechen den Steuerleitungen 211 und 212 in Fig. 4. Die Steuerleitungen 211 bzw. 212 sind mit den Steuereingängen Z1 bzw. Z2 der speziellen Druckbegrenzungsventile 222-B bzw. 222-A verbunden. Die Steuerleitungen 211 und 212 sind am anderen Ende über ein Wechselventil 213 mit einem Lastdrucksteuerkreis LS verbunden. Der Lastdrucksteuerkreis LS ist über eine Blende 214 mit der Rücklaufleitung verbunden. Die zwei 2/2-Wegesitzventile 210-A und 210-B sind identisch zu den Ventilen 110-A und 110-B in Fig. 3. Deshalb können die Ventile 210-A und 210-B dieselben Zustände annehmen wie in Tabelle 1 ausgeführt. Im Zustand **aa** sperren die Ventile 210-A und 210-B und die Steuerleitungen 211 und 212 sind drucklos. D.h. die speziellen Druckbegrenzungsventile 222-A und 222-B befinden sich in einem gesperrten Zustand und ein Abfluss von hydraulischer Flüssigkeit aus den Arbeitsleitungen A und B in die Rücklaufleitung ist nicht möglich. In einem Zustand **bb** sind die Ventile 210-A und 210-B in Durchlaßrichtung geschaltet, d.h. der Druck in der Druckleitung P wird an die beiden Arbeitskammern 10-A und 10-B in dem doppelt wirkenden Zylinder 10, sowie an die speziellen Druckbegrenzungsventile 222-A und 222-B weitergeleitet. Die speziellen Druckbegrenzungsventile 222-A und 222-B sind in diesem Zustand entriegelt, so dass hydraulische Flüssigkeit von den Arbeitsleitungen A und B in die Rücklaufleitung R fließen kann. Damit kann hydraulische Flüssigkeit ungehindert den Druckkammern im doppelt wirkenden Zylinder 10 zu- und abgeführt werden, d.h. die Kolbenstange 12 und die damit verbundenen Räder sind frei beweglich. Der Zustand **bb** ist deshalb ein Schwimmzustand.

Im Zustand **ab** ist das Ventil 210-B in Durchlaßrichtung geschaltet und das Ventil 210-A in Sperrichtung. Wie bei Fig. 3 beschrieben, entspricht dies einer Bewegung der Kolbenstange 112 in der hier gezeigten Darstellung nach rechts. Im Zustand **ba** ist das Ventil 210-A in Durchlaßrichtung geschaltet und das Ventil 210-B ist gesperrt. In diesem Fall bewegt sich die Kolbenstange 12 nach links, wie in Verbindung mit Fig. 3 bereits beschrieben wurde.

Eine Besonderheit dieser Ausführungsform ist, dass die Lasthalteventile 220-A und 220-B bestehend aus den speziellen Druckbegrenzungsventilen 222-A und 222-B in Kombination mit den Rückschlagventilen 221-A und 221-B eine Schock- und Nachsaugefunktion aufweisen. Wird beispielsweise im Zustand **aa** eine schockartige Kraft auf die Kolbentange 12 ausgeübt, beispielsweise durch einen Schlag auf die Kolbenstange 12 auf der in der Fig. 4 gezeigten rechten Seite der Kolbenstange 12, erhöht sich der Druck schockartig in der Arbeitsleitung A. Das spezielle Druckbegrenzungsventil 222-B leitet den schockartigen Druck am Eingang über die gestrichelt gezeichnete Steuerleitung an ein Verstellelement in dem speziellen Druckbegrenzungsventilen 222-B weiter, und wenn der Druck einen vorbestimmten baubedingten, idealerweise verstellbaren Wert überschreitet, öffnet das speziellen Druckbegrenzungsventilen 222-B und sorgt so für eine Druckminderung in der Arbeitsleitung A bis zu diesem vorbestimmten Wert. Umgekehrt entsteht durch die Bewegung und Druckbelastung der Kolbenstange 12 in der Arbeitsleitung B ein Unterdruck, so dass sich das Rückschlagventil 212-A öffnet. Somit kann hydraulische Flüssigkeit aus der Rücklaufleitung über das Rückschlagventil 212-A in die Druckkammer des beidseitig wirkenden Zylinders 10 nachgesaugt werden.

Durch den Anschluss der Steuerleitungen 211 bzw. 212 an eine Lastdrucksteuerleitung LS lässt sich eine Pumpe (nicht gezeigt), die die Druckleitung P mit Druck versorgt, lastdruckabhängig steuern. Zum Beispiel ist im Zustand **aa** (Geradeauslauf) keine Druckversorgung nötig. Die Lastdrucksteuerleitung LS ist drucklos und die Druckversorgungspumpe kann zum Energiesparen in einen Standby-Modus geschaltet werden. Der Restdruck auf der Druckleitung P reicht aus, den Druck in einer der Steuerleitungen 211 bzw. 212 zu erhöhen, wenn eines der Ventile 210-A bzw. 210-B in den Zustand **b** wechselt, so dass die druckversorgende Pumpe über die Lastdrucksteuerleitung LS aktiviert werden kann.

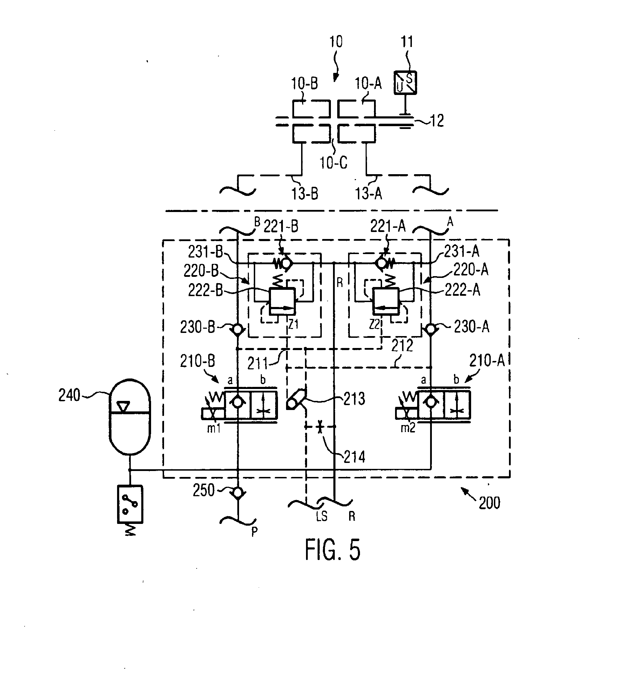

Um Totzeiten für das Hochfahren der Pumpe zu verringern, ist es vorteilhaft, einen Druckspeicher, wie in Fig. 5 gezeigt ist, anzuschließen. Fig. 5 zeigt die hydraulische Lenksteuervorrichtung 200 gemäß der Fig. 4, bei der ein Druckspeicher 240 am Eingang der 2/2-Wegesitzventile 210-A bzw. 210-B angeschlossen ist. Der Druckspeicher ist über ein Rückschlagventil 250 von der Pumpe getrennt, so dass bei Stillstand der Pumpe kein Druck verloren geht. Die Elemente der Fig. 5, die identisch zu den Elementen der Fig. 4 sind, wurden mit den gleichen Bezugszeichen versehen und werden deshalb nicht weiter erläutert. Der Druckspeicher 240 erlaubt eine höhere Lenkdynamik, da Totzeiten in einem lastdruckkreisgeregelten System beim Hochfahren der Pumpe keine Rolle spielen. Weiterhin erreicht man durch den Druckspeicher 240 eine Notversorgung im Fehlerfall, zum Beispiel bei Ausfall der Pumpe, so dass das System lenkbar bleibt und in einen sicheren Zustand versetzt werden kann. Durch den Anschluss des Speichers 240 an leckölfreie 2/2-Wegesitzventile (210-A und 210-B) sowie das leckagefreien Rückschlagsitzventil 250 ist der Speicher im Zulauf leckölfrei integriert und der Druck im Druckspeicher 240 bleibt lange erhalten. Zum Beispiel ist die Lenkung selbst nach längeren Standzeiten sofort funktionstüchtig, noch bevor die Pumpe einen Druck in der Druckleitung P aufbauen kann.

In einer so gestalteten hydraulischen Lenksteuervorrichtung kann jeder Magnet individuell bzw. beide Magnete sogar überlappend angesteuert werden, weil die beiden Magnete nicht über den Schieber, wie im Schieberventil gemäß dem Stand der Technik, mechanisch gekoppelt sind. Dadurch ergibt sich ein Zeitgewinn, weil das Überfahren einer Nullstellung entfällt. Die in der vorliegenden Erfindung verwendeten Sitzventile sind leckagefrei im Gegensatz zu den im Stand der Technik verwendeten Schieberventilen. Ein weiterer Vorteil ist der Gewinn einer vierten Schaltstellung. Während im Schieberventil des Stands der Technik in der Ruhestellung entweder nur eine Blockierstellung oder eine Schwimmstellung realisierbar ist, lässt sich bei der Verwendung von 2/2-Wegesitzventilen sowohl die Schwimmstellung als auch die Blockierstellung in einer Schaltung realisieren. Die Blockierstellung ist für manche Stapler ein wichtiges Sicherheitsmerkmal, weil sich dann in einem Störungsfall der Lenkeinschlag nicht verändert. Auf der anderen Seite kann zum Beispiel beim Abschleppen der Schwimmzustand nützlich sein, wobei sich der Lenkeinschlag einem Zugfahrzeug anpasst.

## Patentansprüche

1. Hydraulische Lenksteuerungsvorrichtung zur Versorgung mindestens eines hydraulischen Aktuators (10) einer Lenkeinrichtung, die folgendes umfasst:
eine erste steuerbare Einrichtung zur Zuführung von unter Druck stehender hydraulischer Flüssigkeit zu dem mindestens einen hydraulischen Aktuator (10); und
eine zweite steuerbare Einrichtung zum Ablassen von hydraulischer Flüssigkeit aus dem mindestens einen hydraulischen Aktuator (10); wobei
die erste steuerbare Einrichtung zwei 2/2-Wege-Sitzventile (110-A, 110-B, 210-A, 210-B) umfasst, die so angeschlossen sind, dass sie einen ersten und zweiten Strömungsweg (A, B) zu dem mindestens einen hydraulischen Aktuator (10) für eine erste und zweite Lenkrichtung in Reaktion auf Lenksignale versorgen können, und
wobei durch die zweite steuerbare Einrichtung zum Ablassen von hydraulischer Flüssigkeit aus dem mindestens einen hydraulischen Aktuator (10) ein Abströmweg in eine Rücklaufleitung (R) unter Umgehung der zwei 2/2-Wege-Sitzventile (110-A, 110-B, 210-A, 210-B) bereitgestellt wird,
**dadurch gekennzeichnet, dass**
die erste steuerbare Einrichtung und die zweite steuerbare Einrichtung hydraulisch so miteinander verbunden sind, dass der Abströmweg in Reaktion auf Drucksignale bereitgestellt wird, die über hydraulische Steuerleitungen (111, 112, 211, 212) von dem ersten und zweiten Strömungsweg (A, B) zu der zweiten steuerbaren Einrichtung (120A, 120B, 220A, 220B) geleitet werden.

2. Hydraulische Lenksteuerungsvorrichtung nach Anspruch 1, wobei jedes der zwei 2/2-Wege-Sitzventile (110-A, 110-B, 210-A, 210-B) ein Proportionalventil ist.

3. Hydraulische Lenksteuerungsvorrichtung nach Anspruch 1, wobei jedes der zwei 2/2-Wege-Sitzventile (110-A, 110-B, 210-A, 210-B) ein taktgesteuertes Schwarz/Weißventil ist.

4. Hydraulische Lenksteuerungsvorrichtung nach einem der Ansprüche 1 bis 3, worin jedes der zwei 2/2-Wege-Sitzventile (110-A, 110-B, 210-A, 210-B) ein vorgesteuertes Ventil ist.

5. Hydraulische Lenksteuerungsvorrichtung nach einem der Ansprüche 1 bis 4, wobei in dem ersten und dem zweiten Strömungsweg (A, B) stromabwärts zu den 2/2-Wege-Sitzventilen (110-A, 110-B, 210-A, 210-B) jeweils ein erstes Rückschlagventil (130-A, 130-B, 230-A, 230-B) angeordnet ist, das in Richtung 2/2-Wege-Sitzventil (110-A, 110-B, 210-A, 210-B) sperrt, und
wobei Steuerleitungen (111, 112, 211, 212) der zweiten steuerbaren Einrichtung an dem ersten bzw. zweiten Strömungsweg (A, B) jeweils zwischen dem 2/2-Wege-Sitzventil (110-A, 110-B, 210-A, 210-B) und dem ersten Rückschlagventil (130-A, 130-B, 230-A, 230-B) angeschlossen sind.

6. Hydraulische Lenksteuerungsvorrichtung nach Anspruch 5, wobei die zweite steuerbare Einrichtung stromabwärts zu den ersten Rückschlagventilen (130-A, 130-B, 230-A, 230-B) an dem ersten und dem zweiten Strömungsweg (A, B) angeschlossen ist.

7. Hydraulische Lenksteuerungsvorrichtung nach Anspruch 5 oder 6, wobei die Steuerleitungen (111, 112, 211, 212) der zweiten steuerbaren Einrichtung über ein Wechselventil (213) mit einer Lastdrucksteuerleitung (LS) verbunden sind.

8. Hydraulische Lenksteuerungsvorrichtung nach Anspruch 7, wobei die Lastdrucksteuerleitung (LS) über eine Blende (214) mit der Rücklaufleitung (R) verbunden ist.

9. Hydraulische Lenksteuerungsvorrichtung nach Anspruch 5 oder 6, wobei die Steuerleitungen (111, 112, 211, 212) der zweiten steuerbaren Einrichtung über jeweils ein Blende (112, 113) mit der Rücklaufleitung (R) verbunden sind.

10. Hydraulische Lenksteuerungsvorrichtung nach einem der Ansprüche 1 bis 9, wobei die zweite steuerbare Einrichtung ein erstes und ein zweites hydraulisch entsperrbares Rückschlagventil (120-A, 120-B) umfasst,
wobei das erste hydraulisch entsperrbare Rückschlagventil (120-B) eine Fluidverbindung zwischen dem ersten Strömungsweg (A) und einer Rücklaufleitung (R) zum Reservoir sperrt, und
wobei das zweite hydraulisch entsperrbare Rückschlagventil (120-A) eine Fluidverbindung zwischen dem zweiten Strömungsweg (B) und der Rücklaufleitung (R) zum Reservoir sperrt.

11. Hydraulische Lenksteuerungsvorrichtung nach einem der Ansprüche 1 bis 9, wobei die zweite steuerbare Einrichtung ein erstes und ein zweites hydraulisch entsperrbares Lasthalteventil (220-A, 220-B) umfasst,
wobei das erste hydraulisch entsperrbare Lasthalteventil (220-B) eine Fluidverbindung zwischen dem ersten Strömungsweg (A) und einer Rücklaufleitung (R) zum Reservoir sperrt, und
wobei das zweite hydraulisch entsperrbare Lasthalteventil (220-A) eine Fluidverbindung zwischen dem zweiten Strömungsweg (B) und der Rücklaufleitung (R) zum Reservoir sperrt.

12. Hydraulische Lenksteuerungsvorrichtung nach einem der Ansprüche 1 bis 11, wobei die 2/2-Wege-Sitzventile (110-A, 110-B, 210-A, 210-B) elektrisch betätigbare Ventile sind.

13. Hydraulische Lenksteuerungsvorrichtung nach einem der Ansprüche 1 bis 12, wobei auf einer Eingangsseite an der ersten steuerbaren Einrichtung zur Zuführung von unter Druck stehender hydraulischer Flüssigkeit zu dem mindestens einen hydraulischen Aktuator (10) eine Druckleitung (P) über eine drittes Rückschlagventil (250) angeschlossen ist, wobei das dritte Rückschlagventil (250) in Richtung zur Druckleitung (P) sperrt, und
wobei ein Druckspeicher (240) an einer Verbindung zwischen der ersten steuerbaren Einrichtung und dem dritte Rückschlagventil (250) angeschlossen ist.

## Claims

1. Hydraulic steering control device for supplying at least one hydraulic actuator (10) of a steering means, comprising the following:
a first controllable means for feeding pressurised hydraulic fluid to the at least one hydraulic actuator (10); and
a second controllable means for discharging hydraulic fluid out of the at least one hydraulic actuator (10),
the first controllable means comprising two 2/2-way seat valves (110-A, 110-B, 210-A, 210-B) which are connected such that they can supply a first and second flow path (A, B) to the at least one hydraulic actuator (10) for a first and second steering direction in response to steering signals, and
an outflow path being provided, by the second controllable means, in a return line (R) bypassing the two 2/2-way seat valves (110-A, 110-B, 210-A, 210-B) for discharging hydraulic fluid from the at least one hydraulic actuator (10),
**characterised in that**
the first controllable means and the second controllable means are hydraulically interconnected such that the outflow path is provided in response to pressure signals which are conveyed over hydraulic control lines (111, 112, 211, 212) from the first and second flow path (A, B) to the second controllable means (120A, 120B, 220A, 220B).

2. Hydraulic steering control device according to claim 1, wherein each of the two 2/2-way seat valves (110-A, 110-B, 210-A, 210-B) is a proportional valve.

3. Hydraulic steering control device according to claim 1, wherein each of the two 2/2-way seat valves (110-A, 110-B, 210-A, 210-B) is a sequentially controlled on/off valve.

4. Hydraulic steering control device according to any of claims 1 to 3, wherein each of the two 2/2-way seat valves (110-A, 110-B, 210-A, 210-B) is a pilot valve.

5. Hydraulic steering control device according to any of claims 1 to 4, wherein in the first and the second flow path (A, B), downstream of the 2/2-way seat valves (110-A, 110-B, 210-A, 210-B), a first check valve (130-A, 130-B, 230-A, 230-B) is arranged in each case and closes in the direction of the 2/2-way seat valve (110-A, 110-B, 210-A, 210-B), and
wherein control lines (111, 112, 211, 212) of the second controllable means are connected to the first and/or second flow path (A, B) between the 2/2-way seat valve (110-A, 110-B, 210-A, 210-B) and the first check valve (130-A, 130-B, 230-A, 230-B) respectively.

6. Hydraulic steering control device according to claim 5, wherein the second controllable means downstream of the first check valves (130-A, 130-B, 230-A, 230-B) is connected to the first and the second flow path (A, B).

7. Hydraulic steering control device according to either claim 5 or claim 6, wherein the control lines (111, 112, 211, 212) of the second controllable means are connected to a load-pressure control line (LS) via a shuttle valve (213).

8. Hydraulic steering control device according to claim 7, wherein the load-pressure control line (LS) is connected to the return line (R) via an orifice plate (214).

9. Hydraulic steering control device according to either claim 5 or claim 6, wherein each of the control lines (111, 112, 211, 212) of the second controllable means is connected to the return line (R) via an orifice plate (112, 113).

10. Hydraulic steering control device according to any of claims 1 to 9, wherein the second controllable means comprises a first and a second hydraulically piloted check valve (120-A, 120-B),
wherein the first hydraulically piloted check valve (120-B) closes a fluid connection between the first flow path (A) and a return line (R) to the reservoir, and
wherein the second hydraulically piloted check valve (120-A) closes a fluid connection between the second flow path (B) and the return line (R) to the reservoir.

11. Hydraulic steering control device according to any of claims 1 to 9, wherein the second controllable means comprises a first and a second hydraulically piloted load-holding valve (220-A, 220-B),
wherein the first hydraulically piloted load-holding valve (220-B) closes a fluid connection between the first flow path (A) and a return line (R) to the reservoir, and
wherein the second hydraulically piloted load-holding valve (220-A) closes a fluid connection between the second flow path (B) and the return line (R) to the reservoir.

12. Hydraulic steering control device according to any of claims 1 to 11, wherein the 2/2-way seat valves (110-A, 110-B, 210-A, 210-B) are electrically actuatable valves.

13. Hydraulic steering control device according to any of claims 1 to 12, wherein a pressure line (P) is connected on an input side to the first controllable means for feeding pressurised hydraulic fluid to the at least one hydraulic actuator (10) via a third check valve (250), wherein the third check valve (250) closes in the direction of the pressure line (P), and
wherein a pressure reservoir (240) is connected to a connection between the first controllable means and the third check valve (250).

## Revendications

1. Dispositif de commande de direction hydraulique pour alimenter au moins un actionneur hydraulique (10) d'un système de direction, comprenant :
un premier dispositif commandé pour alimenter un fluide hydraulique sous pression à au moins un actionneur hydraulique (10) ; et
un deuxième dispositif commandé pour décharger un fluide hydraulique dudit au moins un actionneur hydraulique (10) ; dans lequel
le premier dispositif commandé comporte deux vannes à siège multivoies 2/2 (110-A, 110-B, 210-A, 210-B) qui sont connectées de telle sorte qu'elles peuvent fournir des premier et deuxième chemins d'écoulement (A, B) audit au moins un actionneur hydraulique (10) pour des premier et deuxième sens de direction en réaction à des signaux de direction, et
dans lequel, au moyen du deuxième dispositif commandé pour drainer un fluide hydraulique dudit au moins un actionneur hydraulique (10), une voie d'évacuation dans une ligne de retour (R) est pourvue en contournant les deux vannes à siège multivoies 2/2 (110-A, 110-B, 210-A, 210-B),
**caractérisé**
**en ce que** le premier dispositif commandé et le deuxième dispositif commandé sont connectés hydrauliquement entre eux de telle sorte que la voie d'évacuation est pourvue en réaction aux signaux de pression qui sont conduits via des lignes de commande hydrauliques (111, 112, 211, 212) depuis les premier et deuxième chemins d'écoulement (A, B) vers le deuxième dispositif commandé (120A, 120B, 220A, 220B).

2. Dispositif de commande de direction hydraulique selon la revendication 1, dans lequel chacune des deux vannes à siège multivoies 2/2 (110-A, 110-B, 210-A, 210-B) est une vanne proportionnelle.

3. Dispositif de commande de direction hydraulique selon la revendication 1, dans lequel chacune des deux vannes à siège multivoies 2/2 (110-A, 110-B, 210-A, 210-B) est une vanne tout ou rien contrôlée par une horloge.

4. Dispositif de commande de direction hydraulique selon l'une des revendications 1 à 3, dans lequel chacune des deux vannes à siège multivoies 2/2 (110-A, 110-B, 210-A, 210-B) est une vanne pilotée.

5. Dispositif de commande de direction hydraulique selon l'une des revendications 1 à 4,
dans lequel sur chacun des premier et deuxième chemins d'écoulement (A, B) en aval des vannes à siège multivoies 2/2 (110-A, 110-B, 210-A, 210-B) est agencé un premier clapet anti-retour (130-A, 130-B, 230-A, 230-B) qui bloque un écoulement en direction de la vanne à siège multivoies 2/2 (110-A, 110-B, 210-A, 210-B) respective, et
dans lequel des lignes de commande (111, 112, 211, 212) du deuxième dispositif commandé sont respectivement raccordées sur le premier ou deuxième chemin d'écoulement (A, B) entre la vanne à siège multivoies 2/2 (110-A, 110-B, 210-A, 210-B) et le premier clapet anti-retour (130-A, 130-B, 230-A, 230-B).

6. Dispositif de commande de direction hydraulique selon la revendication 5, dans lequel le deuxième dispositif commandé est connecté en aval des premiers clapets anti-retour (130-A, 130-B, 230-A, 230-B) aux premier et deuxième chemins d'écoulement (A, B).

7. Dispositif de commande de direction hydraulique selon la revendication 5 ou 6, dans lequel les lignes de commande (111, 112, 211, 212) du deuxième dispositif commandé sont connectées via un clapet navette (213) à une ligne de commande de pression de charge (LS).

8. Dispositif de commande de direction hydraulique selon la revendication 7, dans lequel la ligne de commande de pression de charge (LS) est connectée à la ligne de retour (R) via un diaphragme (214).

9. Dispositif de commande de direction hydraulique selon la revendication 5 ou 6, dans lequel les lignes de commande (111, 112, 211, 212) du deuxième dispositif commandé sont connectées à la ligne de retour (R) via un diaphragme (112, 113).

10. Dispositif de commande de direction hydraulique selon l'une des revendications 1 à 9,
dans lequel le deuxième dispositif commandé comporte des premier et deuxième clapets anti-retour à déblocage hydraulique (120-A, 120-B),
dans lequel le premier clapet anti-retour à déblocage hydraulique (120-B) bloque une connexion de fluide entre le premier chemin d'écoulement (A) et une ligne de retour (R) vers le réservoir, et
dans lequel le deuxième clapet anti-retour à déblocage hydraulique (120-A) bloque une connexion de fluide entre le deuxième chemin d'écoulement (A) et la ligne de retour (R) vers le réservoir.

11. Dispositif de commande de direction hydraulique selon l'une des revendications 1 à 9,
dans lequel le deuxième dispositif commandé comporte des première et deuxième vannes de maintien de charge à déblocage hydraulique (220-A, 220-B),
dans lequel la première vanne de maintien de charge à déblocage hydraulique (220-B) bloque une connexion de fluide entre le premier chemin d'écoulement (A) et une ligne de retour (R) vers le réservoir, et
dans lequel la deuxième vanne de maintien de charge à déblocage hydraulique (220-A) bloque une connexion de fluide entre le deuxième chemin d'écoulement (A) et la ligne de retour (R) vers le réservoir.

12. Dispositif de commande de direction hydraulique selon l'une des revendications 1 à 11, dans lequel les vannes à siège multivoies 2/2 (110-A, 110-B, 210-A, 210-B) sont des vannes à actionnement électrique.

13. Dispositif de commande de direction hydraulique selon l'une des revendications 1 à 12,
dans lequel une ligne pressurisée (P) est raccordée via un troisième clapet anti-retour (250) à un côté d'entrée du premier dispositif commandé pour alimenter un fluide hydraulique sous pression audit au moins un actionneur hydraulique (10), dans lequel le troisième clapet anti-retour (250) est bloqué en direction de la ligne pressurisée (P), et
dans lequel un accumulateur de pression (240) est connecté à une connexion entre le premier dispositif commandé et le troisième clapet anti-retour (250).
